# EUROPEAN PATENT APPLICATION

(11) **EP 4 074 487 A1**
(43) Date of publication of application: **19.10.2022**
(21) Application number: 22168205.7
(22) Date of filing: 13.04.2022
(51) Int. Cl.: B29C 45/14, B29C 45/16, B62J 1/08, B29K 21/00, B29L 31/00, B29L 31/44, B29L 31/50, B29K 209/06, B29K 675/00, B29L 31/30

(54) **METHOD FOR MAKING AN ELASTICALLY YIELDING LAYER ON A RIGID SURFACE AND ARTICLE COMPRISING SUCH ELASTICALLY YIELDING LAYER**

(30) Priority: 16.04.2021 IT 202100009659
(71) Applicant: SELLE ITALIA S.r.l., 31011 Asolo (TV) (IT)
(72) Inventor: BIGOLIN, Giuseppe, I-31011 Asolo, TREVISO (IT); PEROTTO, Riccardo, I-31011 Asolo, TREVISO (IT)
(74) Representative: Busana, Omar

(57) **Abstract**

A method for making an elastically yielding layer (14) on a rigid or substantially rigid support surface (16) of an article (12) comprises a step of providing a support surface (16) inside a mold (18) for injection molding provided with a molding cavity (20), comprising a die (22) and a punch (24). The support surface (16) is in use facing the elastically yielding layer (14). The support surface (16) forms a wall of the molding cavity (20). There is also a step of providing an insert (26) inside the molding cavity (20) and a step of closing the mold (18). A step of injection molding of a thermoplastic polymer above the support surface (16), between the support surface (16) and the mold (18) is also provided.

## Description

### FIELD OF APPLICATION

The present invention relates to a method for making an elastically yielding layer and an article comprising such an elastically yielding layer. In particular, the present invention relates to a method for making an elastically yielding layer for the production of a padding of a support surface or of a shoe sole.

### PRIOR ART

As is known, the surfaces intended to make seats, supports or shoe soles essentially comprise a rigid or substantially rigid surface on which a padding and an outer coating are arranged.

In this discussion, the expressions rigid or substantially rigid mean a structural element intended to support an elastically yielding layer such as a padding or the soft part of a shoe sole.

It is known to provide a padding, for example of expanded polyurethane, between the body and the outer coating.

As is known, the method for making an article of this type comprises a first step in which a coating material is arranged inside a mold, which comprises a counter-shaped surface with respect to the support surface of the article.

Once the coating material is positioned, it must be placed in contact with the counter-shaped surface of the mold, in the most adherent possible manner, so that it reproduces, in a precise way, the surface of the mold itself. In this regard, the use of means suitable for creating a vacuum (with a predetermined residual pressure) between the surface of the mold and the coating material is known, so that the latter adheres to the surface of the mold.

An element with a rigid surface is positioned on the second half of the mold, which reproduces the surface of an element in negative, so that its inner side, which in use will face the padding, is visible.

Subsequently, onto the first half of the mold, and then onto the inner side of the coating material it is poured a foamed material in liquid form, for example polyurethane.

The mold is then closed, and the polyurethane is allowed to cure. In this case, the expanded polyurethane acts as a padding and at the same time as a binder between the shell and the coating material.

The time required for the expanded polyurethane to cure is about six minutes. Once curing is achieved, the mold may be opened and the product extracted from the mold itself.

At this point, operations, usually manual, may be necessary to trim the excess edges of the coating material.

Alternatively, it is possible to make the foam padding separately, with a method similar to the previous one, and then fix the various components together using specific adhesives or glues.

The prior art, although widely appreciated, is not free from drawbacks both from the point of view of their production and from the point of view of comfort for the user.

The method of the prior art requires very long cycle times, at least about six minutes, time necessary for the expanded polyurethane to cure. The time required to restore the equipment for the production of the next article should be added to this cycle time.

Furthermore, in this method the operator must make multiple interventions, since most of the steps are managed and carried out by specialized operators.

Furthermore, the use of glues or adhesives to fix the various components together creates a drawback in terms of environmental impact, both for the use in itself of these substances, and for a possible recyclability of the various materials with which the article is made.

From the point of view of comfort, there is an intrinsic inability of the polyurethane to respond to tangential stresses, since its reaction to an applied stress is a simple compression.

### DISCLOSURE OF THE INVENTION

The need is therefore felt to solve the drawbacks and limitations mentioned with reference to the prior art.

Therefore, the need is felt to provide a method for making an article which allows having very short cycle times compared to the methods of the prior art.

Furthermore, the need is felt for a method for making an article that is subject to limited manual operations by operators.

Furthermore, the need is felt for a method in which glues and adhesives are not used, or are used minimally, and which may therefore be an environmentally friendly method using completely recyclable materials.

Such requirements are met, at least partially, by a method for making an elastically yielding layer on a rigid or substantially rigid support surface according to claim 1, a saddle according to claim 13, a seat according to claim 15 and a footwear according to claim 16.

### DESCRIPTION OF THE DRAWINGS

Further features and advantages of the present invention will appear more clearly from the following description of preferred non-limiting embodiments thereof, in which:
- Figure 1 schematically shows a sectional view of a mold and of a portion of a possible embodiment of an elastically yielding layer;
- Figure 2 schematically shows a sectional view of a mold and of a portion of a possible embodiment of an elastically yielding layer;
- Figures 3 and 4 show a cross-sectional schematic view of two embodiments of an article obtainable with the method of the present invention;
- Figures 5-7 schematically show cross sections of an article made with a method according to the present invention;

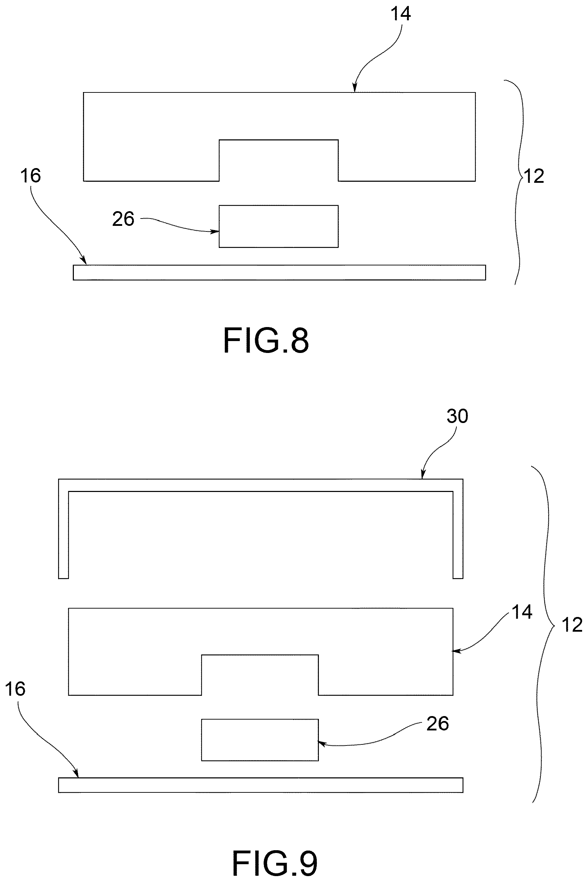

- Figures 8 and 9 schematically show two exploded figures of two embodiments of an article obtainable with the method according to the present invention;
- Figures 10 and 11 schematically show two lateral sections of two shoes obtained according to the method of the present invention; and
- Figure 12 schematically shows a chair obtained with the method according to the present invention.
Elements or parts of elements common to the embodiments described hereinafter will be indicated with the same reference numerals.

### DETAILED DESCRIPTION

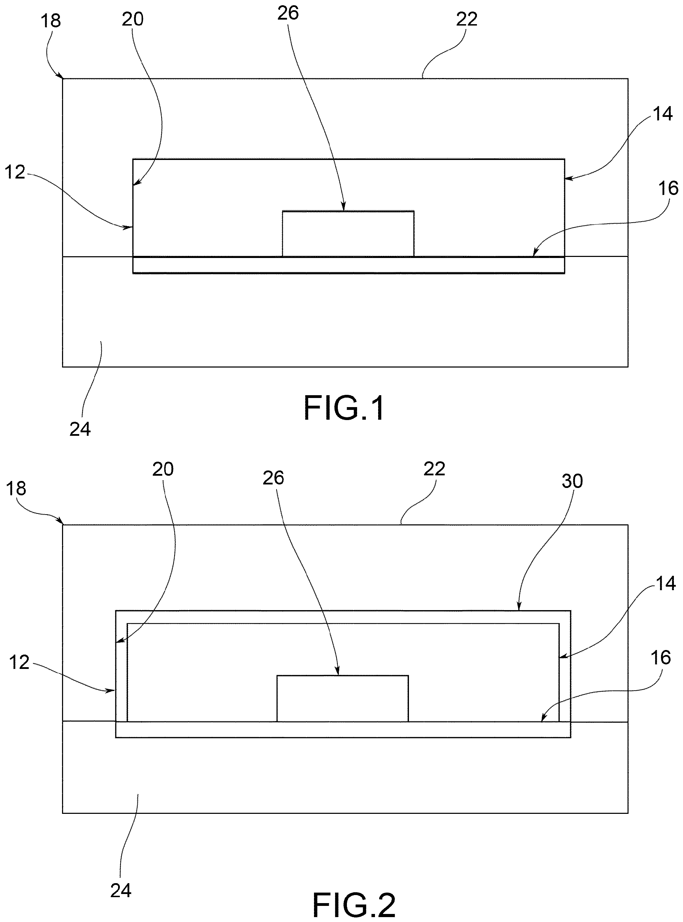

Figure 1 shows a step of a method for making an elastically yielding layer 14 on a rigid or substantially rigid support surface 16 of an article 12.

In its essential form, the method of the present invention comprises the steps of:
(a) providing a support surface 16 inside a mold 18 for injection molding provided with a molding cavity 20, comprising a die 22 and a punch 24; the support surface 16 in use facing the elastically yielding layer 14, and forming a wall of the molding cavity 20.
(b) providing at least one insert 26 inside the molding cavity 20;
(c) closing the mold 18; and
(d) injection molding a thermoplastic polymer over the support surface 16, between the support surface 16 and the mold 18.

According to a possible embodiment, the polymer used in step (d) may be a TPE thermoplastic elastomer.

Advantageously, the polymer used in step (d) may be for example an SBS rubber (styrene-butadiene-styrene rubber).

According to a possible embodiment, the polymer used in step (d) may be the material marketed under the name PEBAX^{®}.

The layer of material that creates the elastically yielding layer may have a hardness of between 5 and 60 shore A.

The insert 26 may have a lower hardness than the polymer used in step (d). In particular, the insert 26 may have a hardness of between 0 and 5 shore A, preferably 0 shore A.

According to a possible embodiment, the insert 26 may be made of polyurethane, for example flexible expanded polyurethane.

In alternative embodiments, the insert 26 may be made of expanded polypropylene (also molded), expanded polyethylene, expanded polyurethane, expanded EVA, expanded EPDM, expanded Neoprene. Advantageously, the insert 26 may be made of foamed materials with low density and specific weight. Advantageously, these materials may also allow the customization of the article according to the user. The articles made with inserts made with slow-memory self-forming materials may make the article individual.

The insert 26 may have a higher hardness than the polymer used in step (d).

In particular, the insert may be made with a rigid polymer, carbon or other rigid material.

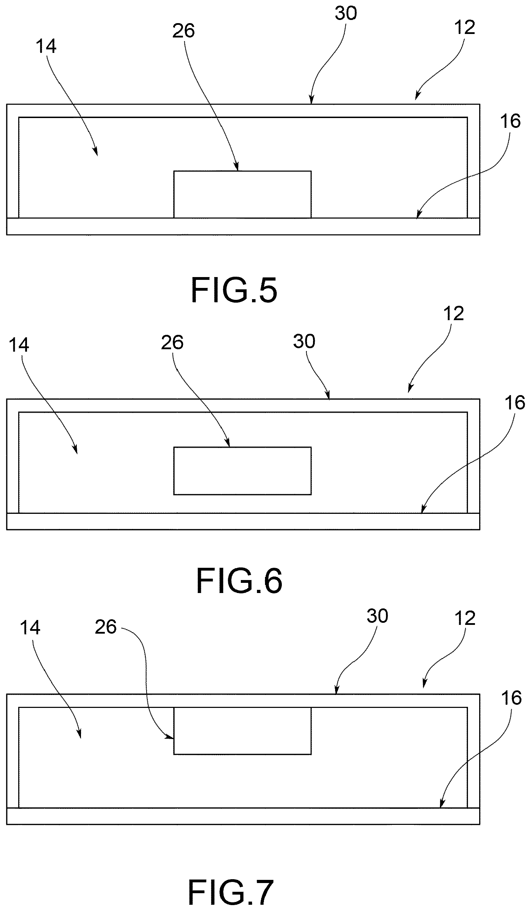

As may be seen for example in the examples of Figures 5-7, the insert 26 may be arranged in contact with the support surface 16, or embedded inside the polymer.

According to a possible embodiment, the insert 26 may occupy a predetermined area of the elastically yielding layer.

For example, in the case of a shoe, the insert may have an extension substantially equal to the sole, or be arranged at restricted areas such as the heel and/or toe of the shoe.

According to a possible embodiment, the article 12 may comprise a plurality of inserts 26 according to specific requirements. Advantageously, it is possible to use inserts of different types to create areas with differentiated bearing capacity on the same article.

According to a possible embodiment, the outer surface of the elastically yielding layer 14 may be coated with a coating layer 30.

The coating layer 30 may for example be provided inside the mold before step (d). An embodiment of this type is shown for example in Figure 2.

In a possible alternative embodiment, the coating layer 30 may be prepared after step (d) by gluing.

The coating layer may be, for example, a fabric, a leather, a synthetic leather, or a polymeric material.

The function of the coating layer is, for example, to make the article more comfortable to the touch, and/or to protect the layer of polymeric material or the insert.

In fact, as may be seen for example in Figure 7, the insert may be embedded inside the injected polymeric layer so as to at least partially form an outer surface.

According to a possible embodiment, the support surface 16 may be made by injection molding in a mold 18 comprising the punch 24 and a second die (not shown in the accompanying Figures).

Alternatively, the support surface 16 may be made by injection molding inside a dedicated mold, and subsequently positioned inside the mold 18.

The thermoplastic polymer which is injected inside the mold may allow the direct fixing of the material of the elastically yielding layer, by means of a chemical bond, to the support surface 16.

Furthermore, the polymer used in the injection step allows the insert 26 to be effectively fixed to the support surface 16. In other words, the thermoplastic polymer allows fixing to the support surface 16, but also to the insert 26, the mechanical properties of which it is therefore possible to exploit.

Furthermore, the thermoplastic polymer, in particular SBS rubber, used in the injection step having a hardness of between 5 and 60 shore A allows obtaining:
- wear resistance (determined for example by rubbing with the user's clothing,
- impermeability;
- control of the surface friction, which may be varied according to the specific requests, for example by adding additives.

According to a possible embodiment of the present invention, the support surface 16 may be made of thermoplastic material with a high elastic modulus and a high hardness.

The support surface 16 may be made of thermoplastic material, for example of copolymer polypropylene.

The copolymer propylene used may optionally be of the filled type. In particular, the copolymer polypropylene may be charged with fillers of the type known per se as glass fiber, carbon, and/or talc, etc.

Advantageously, the support surface 16 may be made of copolymer polypropylene charged with a percentage of glass fiber between 5% and 15%, preferably around 10%.

In this case, the elastic modulus of a copolymer polypropylene charged with a percentage of glass fiber of around 10% may have a modulus of elasticity higher than 2000.

This copolymer polypropylene solution, charged with a percentage of glass fiber of around 10%, allows achieving an optimal fixing of the thermoplastic elastomer of which the padding is made, especially in the case of SBS material.

The mold used in the method of the present invention will not be further explored as it is of a type per se known to those skilled in the art. Likewise, the ducts for feeding the polymer to the mold cavity are not shown, since they too are elements in themselves known to those skilled in the art.

As mentioned above, the support surface 16 may be made using the same punch but with a different die, or made in a dedicated mold and subsequently introduced into the mold.

From the point of view of the manufactured article, the two methods are substantially equivalent. From a production point of view, the second method allows splitting the molding times on two machines, with the possibility of further decreasing the production times, and to be able to create a certain amount of stock of subsets to then be overmolded in another machine.

According to a possible embodiment, the article 12 may be a saddle for a bicycle.

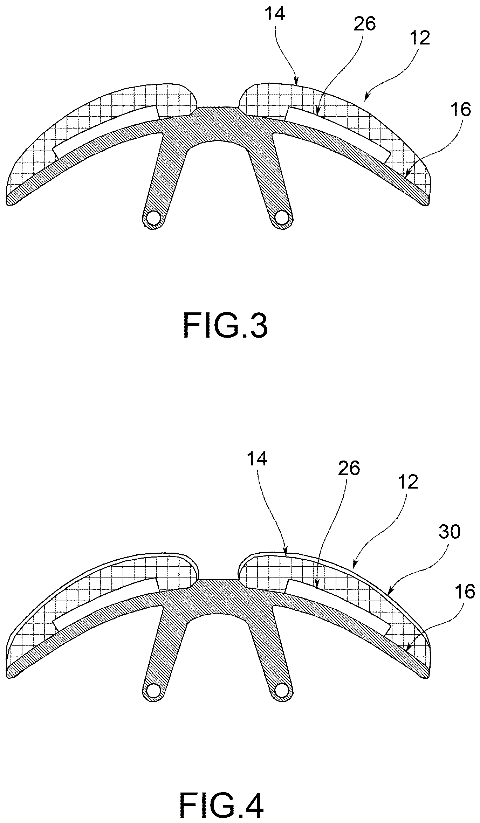

In particular, Figure 3 shows a possible embodiment of a saddle, in which the resting surface of the saddle is made at least partially with the polymer injected during step (d). Furthermore, according to a possible embodiment, the insert 26 may be in contact with the support surface 16.

In the embodiment shown in Figure 4, the saddle is provided with a coating layer 30 which forms the resting surface of the saddle.

In Figures 3-4, the saddle of a bicycle is represented in cross section, however, the principles of the present invention may also be applied to other types of saddles, such as for example the saddle of a motorcycle.

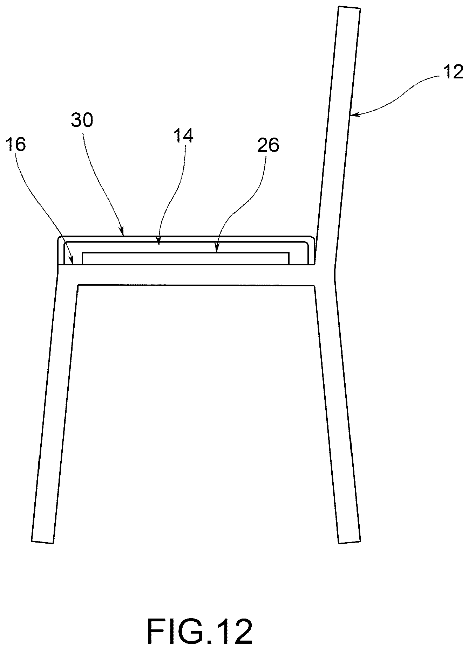

Likewise, the principles of the present invention may be applied to the seat and back of a chair (see in this regard Figure 12 in which the elastically yielding layer is arranged at the seat of a chair), or to a seat for example for automotive use.

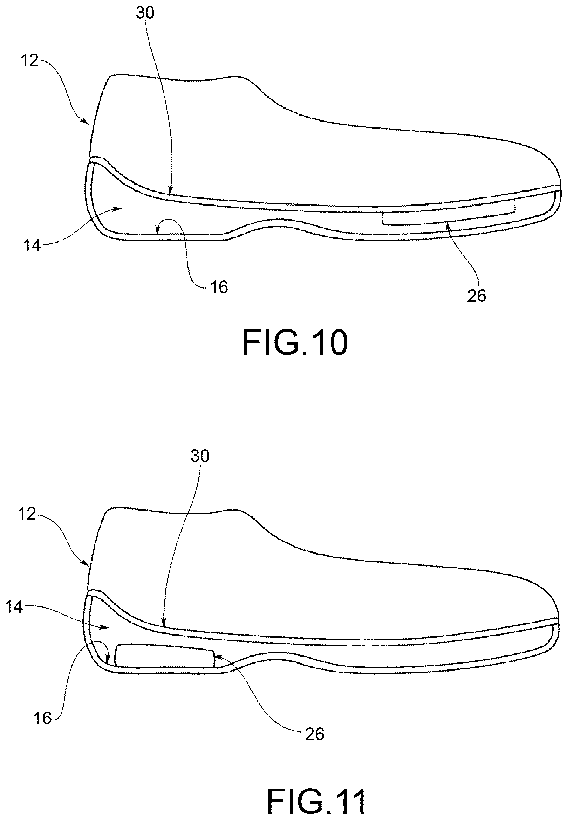

Figures 10 and 11 show footwear 12 in which a sole 32 is arranged with an elastically yielding layer 14.

According to a possible embodiment, the sole 32 has a tread 34 having a rigid or substantially rigid support surface 16. The sole 32 comprises an elastically yielding layer 14 made with a method according to the present invention.

In this case, the sole 32 and in particular the support surface 16, is positioned inside the mold and the previously described steps are carried out. Subsequently, the sole thus made is fixed in a manner known per se to the shoe upper.

As may be seen in Figures 10 and 11 and as previously mentioned, the insert 26 may be arranged at the toe portion or the heel portion of the sole.

In a possible alternative embodiment, the insert 26 may be arranged at the toe portion and the heel portion, and may be a whole.

The advantages which may be achieved with the method of the present invention are therefore evident.

First of all, the method and therefore the materials used allow the performance of the article to be increased, especially in terms of comfort.

Furthermore, they allow the eco-sustainability and the recycling of the materials used to be increased.

Furthermore, the operations required of the operators during the method significantly decrease, since it is not necessary to wait for the curing of the polyurethane as in the prior art.

Furthermore, the method according to the present invention allows the production costs to be significantly reduced, since the cycle times may be drastically reduced.

A method has also been provided for making a saddle and a relative saddle which allow a more comfortable saddle to be obtained compared to the current saddles made with expanded polyurethane. In particular, a saddle suitable for integrally accompanying the translation of the pelvis/ischial bones of the user during use.

Furthermore, a method has been provided in which, by modifying some additives used during injection molding, it is possible to control the mechanical properties of the outer surface of the saddle, without significantly changing the properties of the material of which the internal padding core is made.

Furthermore, a chair and a seat have been provided in which the seat is more comfortable and convenient to produce than in the prior art.

Finally, a shoe has been provided in which the grip between the tread and the midsole has been improved, by virtue of the chemical bond between the two components described above.

Furthermore, the method allows making areas with differentiated hardness, by virtue of the use of inserts in different positions or inserts of different types in the same product.

Those skilled in the art, in order to meet specific needs, may make changes and/or replacements of the elements described above with equivalent elements to the embodiments described, without thereby departing from the scope of the appended claims.

## Claims

1. Method for making an elastically yielding layer (14) on a rigid or substantially rigid support surface (16) of an article (12) comprising the steps of:
(a) providing a support surface (16) inside a mold (18) for injection molding provided with a molding cavity (20), comprising a die (22) and a punch (24); said support surface (16) in use facing said elastically yielding layer (14), said support surface (16) forming a wall of the molding cavity (20);
(b) providing at least one insert (26) inside the molding cavity (20);
(c) closing the mold (18);
(d) injection molding a thermoplastic polymer over said support surface (16), between said support surface (16) and said mold (18).

2. Method of making an article (12) according to claim 1, **characterized in that** the polymer used in step (d) is a thermoplastic elastomer TPE.

3. Method of making an article (12) according to any of the claims 1-2, **characterized in that** the polymer used in step (d) is an SBS rubber.

4. Method of making an article (12) according to any of the claims 1-3, **characterized in that** the insert (26) is less hard than the polymer used in step (d).

5. Method of making an article (12) according to any of the claims 1-3, **characterized in that** the insert (26) is harder than the polymer used in step (d).

6. Method of making an article (12) according to any of the claims 4-5, **characterized in that** said insert (26) is made of polyurethane.

7. Method of making an article (12) according to claim 6, **characterized in that** said insert (26) is made of flexible expanded polyurethane.

8. Method of making an article (12) according to the preceding claim, **characterized in that** the portion of said elastically yielding layer (14) made in step (d) has a hardness between 5 and 60 shore A, and said insert (26) a hardness between 0 and 5 shore A, preferably 0 shore A.

9. Method of making an article (12) according to any of the claims 1-8, **characterized in that** the outer surface of said elastically yielding layer (14) is coated with a coating layer (30), said coating layer (30) being arranged inside the mold prior to step (d) or arranged subsequently by gluing.

10. Method of making an article (12) according to any of the claims 1-9, **characterized in that** said support surface (16) is made by injection molding in a mold (18) comprising the punch (24) and a second die.

11. Method of making an article (12) according to any of the claims 1-10, **characterized in that** said support surface (16) is made by injection molding inside a dedicated mold and is subsequently placed inside the mold (18) .

12. Method of making an article (12) according to any of the claims 1-11, **characterized in that** said article (12) is a bicycle seat, a motorcycle seat, a supporting element, a sitting, a seat, or footwear.

13. Saddle (12) comprising a shell (161) and an elastically yielding layer (14), said shell (161) being made of a thermoplastic polymer comprising a support surface (16) which in use is facing said elastically yielding layer (14) and a supporting surface (28), said elastically yielding layer (14) being made by a method according to any one of claims 1-12.

14. Saddle (12) according to claim 13, **characterized in that** said saddle is a bicycle or motorcycle saddle.

15. Seat (12) comprising a rigid or substantially rigid support surface (16), said support surface belonging to a seat and/or a backrest, said seat (12) comprising an elastically yielding layer (14) made by a method according to any of the claims 1-12.

16. Footwear (12) comprising a sole (32) having a tread (34) having a rigid or substantially rigid support surface (16), said sole (32) comprising an elastically yielding layer (14) made by a process according to any of the claims 1-12.
